# EUROPEAN PATENT SPECIFICATION

(11) **EP 1 115 191 B1**
(45) Date of publication and mention of the grant of the patent: **27.08.2008**
(21) Application number: 00128111.2
(22) Date of filing: 21.12.2000
(51) Int. Cl.: H02K 3/52, H02K 5/22, H01R 39/32

(54) **Connection assembly particularly for the windings of a stator of an electric motor**
Verbindungsanordnung, insbesondere für die Statorwicklung eines Elektromotors
Ensemble de connexion, en particulier pour le bobinage de stator d'un moteur électrique

(30) Priority: 05.01.2000 IT PD000001
(43) Date of publication of application: 11.07.2001
(73) Proprietor: Inarca S.p.A., 35010 Vigodarzere (PD) (IT)
(72) Inventor: Boischio, Ido, 35020 Ponte di Brenta (Padova) (IT)
(74) Representative: Modiano, Micaela Nadia

(56) References cited:
- EP-A- 0 716 478
- EP-A- 0 837 542
- DE-A- 19 606 141
- US-A- 5 204 565

## Description

The present invention relates to a connection assembly particularly for the windings of a stator of an electric motor.

The documents EP 0 837 542 A1, US 5 204 565, and EP 0 716 478 A2 disclose conventional connector assemblies for electric motor stator windings.

It is known that electric motor manufacturers have long been tending increasingly toward automation in the manufacture of said motors, particularly by designing components which can be easily assembled automatically or at least semiautomatically.

One of the critical steps in the manufacturing process of electric motors is the connection of the stator windings to the power supply.

This connection in fact entails connecting one or a plurality of wires which exit from the stator and must be connected to a matching number of wires that arrive from the power supply.

This connection must be safe in terms of layout and free from unwanted contacts and short-circuits, and must give assurance to operators, both during assembly and during manufacture, that application occurs easily and safely as regards possible injury.

For this purpose, a very large number of connectors or connection assemblies have been designed and are currently commercially available which substantially provide predefined seats for the connection terminals, which are anchored in various manners, usually to the stator pack.

The development of such connectors or connection assemblies, however, has not yet reached its optimum level, since there are still considerable problems in harmonizing them with an automatic or at least semiautomatic manufacturing process.

Moreover, good flexibility in application in relation to the type of motor to which they are applied is sometimes not available.

The aim of the present invention is to provide a connection assembly, particularly for the seats of a stator of an electric motor, which solves the drawbacks noted above in conventional connectors or connection assemblies, particularly ensuring an effective and safe connection of the power supply wires or cables to the stator wires.

Within this aim, an object of the present invention is to provide a connection assembly which allows a substantially automatic or semiautomatic assembly and ensures, during application, an equally safe and easy application of the connections on the part of the operator.

Another object of the present invention is to provide high flexibility in application both in relation to the type of motor on which the assembly is applied and in relation to the intended use of the motor.

Another object of the present invention is to provide a connection assembly which can be mass-manufactured and which can be assembled in an automated or partly automated manner.

Another object of the present invention is to provide a connection assembly which can be manufactured at competitive costs with respect to assemblies or connectors having similar functionality.

These objects are achieved by a connection assembly according to the invention as defined in the independent claim 1. Further embodiments of the invention are claimed in the dependent claims.

Further characteristics and advantages of the present invention will become better apparent from the following detailed description of some embodiments thereof, illustrated only by way of non-limitative example in the accompanying drawings, wherein:
Figure 1 is a perspective view of a connection assembly according to the invention, applied to the stator of an electric motor;
Figure 2 is a partially sectional view of the assembly of Figure 1;
Figures 3 to 5 are various views of a same component of the assembly of Figure 1;
Figure 6 is a partially sectional view of the assembly of Figure 1;
Figure 7 is a view of the assembly of Figure 1;
Figure 8 is a partially sectional view of another component of the assembly of Figure 1;
Figures 9 and 10 are various views of another embodiment of the component of the assembly of Figure 1;
Figure 11 is a partially sectional view of another component of the assembly of Figure 1, applied to the stator;
Figure 12 is another partially sectional view of the component of Figure 11.

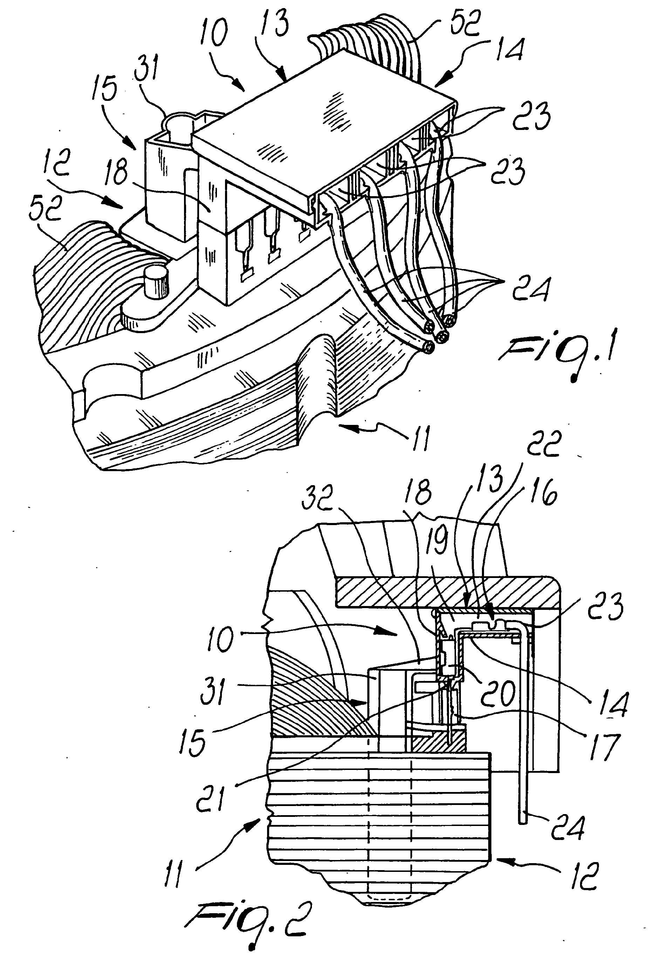

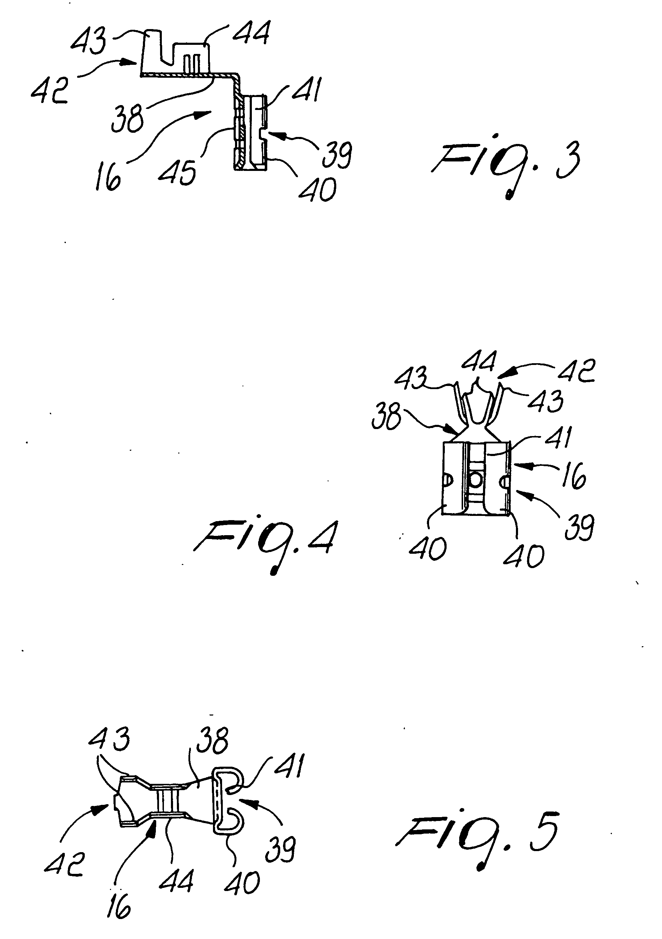

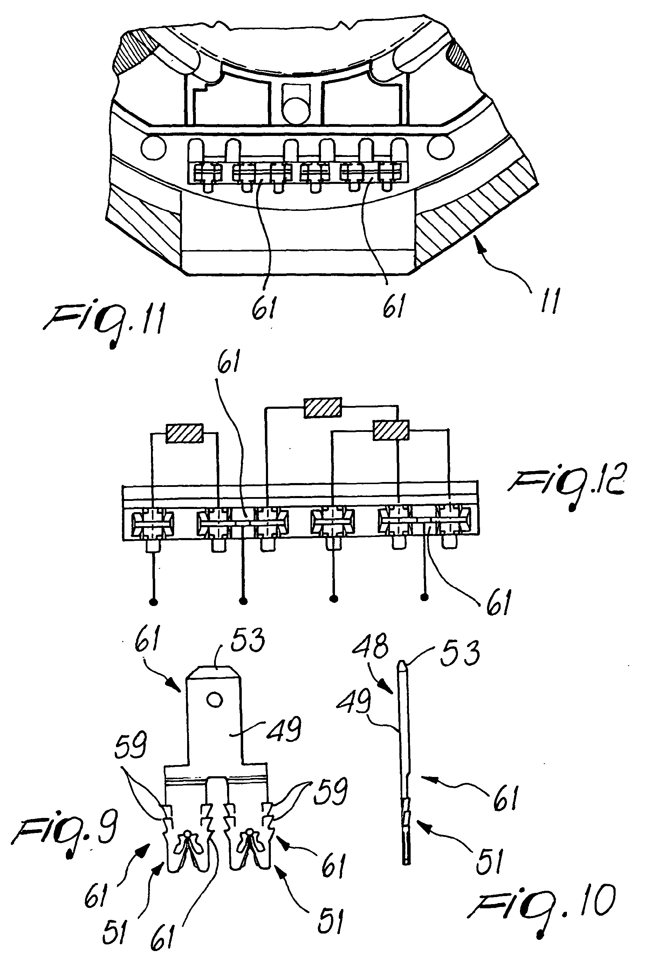

With reference to Figures 1 to 12, a connection assembly particularly for the windings of a stator of an electric motor, according to the invention, is generally designated by the reference numeral 10.

In particular, in this case the assembly 10 is applied to the stator 11 of an electric motor, which is generally designated by the reference numeral 12 and is shown only partially in the figures.

The assembly 10 comprises a connector 13 which is constituted by a first section 14 for connection to the terminals, which are described in greater detail hereinafter, and a second section 15 for anchoring to the stator 11 of the motor 12.

The first section 14 accommodates one or a plurality of female terminals, designated by the reference numeral 16, which are connected to one or a plurality of complementary male terminals 17 which are connected to the stator windings.

Moreover, the first section 14 is constituted by a box-like body 18 which is shaped so as to form one or a plurality of seats 19 which are electrically insulated; each seat is designed to accommodate a corresponding female terminal 16 which is shaped substantially complementarily.

The walls that constitute each one of the seats 19 form, for said seats, a substantially L-shaped extension, with a first connecting portion 20 which on assembly is aligned with the longitudinal extension of the male terminals 17 and is provided with a first opening 21 for the insertion of at least part of a corresponding one of the male terminals, and a second portion 22 which lies substantially at right angles to the first portion 20, is designed to support a corresponding female terminal 16 and is provided with a second end opening 23 for the insertion of the corresponding end portion of the corresponding power supply cable, designated by the reference numeral 24 in the figures.

The body 18 has, for each one of the first portions 20, at the internal definition surface that lies opposite the second portion 22, a second retention tab 25 which is laminar and elastically flexible and is inclined with respect to the plane of arrangement of the elevation wall, which has a free end 26 which is raised with respect to the latter so as to form a locking abutment surface for part of the corresponding female terminal 16 in the opposite direction with respect to the insertion direction.

The body 18 is shaped, for each one of the first portions 20 at the definition surface that lies opposite the one related to the first tab 25, so as to form a straight channel 27 for guiding the insertion of the corresponding female terminal 16.

The first opening 21 is shaped substantially complementarily to the insertion portion of the corresponding male terminal 17 and is arranged so as to guide the latter in insertion in the corresponding female terminal portion 16 which is described in detail hereinafter.

The body 18 is shaped, at one of said second openings 23, so as to form a recess 28 which is associated with retention means, described hereinafter, for accommodating in a predefined position the end portion of a corresponding power supply cable 24.

In particular, the retention means are constituted by opposite teeth 29; however, in other cases, the operator may, in view of the particular situation of application, not use teeth 29, allowing the corresponding cable 24 to exit in a straight line, as shown in dashed lines in Figure 2.

Each one of the recesses 28 is surrounded by a guiding border 30 which lies substantially parallel to the corresponding and opposite first portion 20.

The second section 15 is constituted by a second hollow tab 31, with a transverse cross-section which is shaped complementarily to the insertion seat formed in the stator 11 and with a longitudinal extension which is substantially parallel to the first portion 20; the second tab 31 constitutes the seat for the thermal protection device, which is of a per se known type not shown in the figures.

The second tab 31 is monolithic with respect to the free end of a bracket 32 which is in turn monolithic with respect to the body 18 in a position which lies opposite the position for the insertion of the power supply cables 24. The second tab 31, thanks to its shape and position, also allows to accommodate the thermal protection device even after connection has occurred.

The connector 13 also has a cover 33 with an opening and closure path of the edge-hinged type which is transverse to the path for the insertion of the power supply cables 24.

The cover 33 is fixed and pivoted laterally to the body 18 by means of bands 34 which are monolithic thereto and are provided with a weaker region for folding.

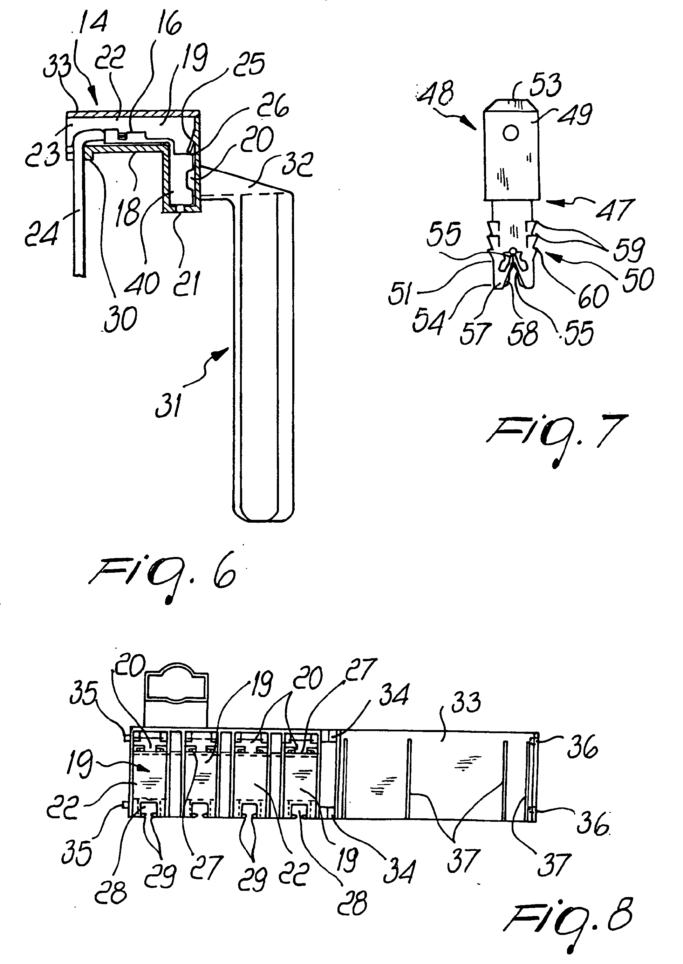

The cover 33 is also associated with locking means which are constituted, in this case, by monolithic teeth 35 which cantilever out from the body 18, are arranged opposite the pivoting bands 34 and are adapted to enter corresponding holes 36 (shown in dashed lines in Figure 7) which are formed at the free end of the cover 33.

The cover is also provided with internal reinforcement ridges 37.

In this case, each one of the female terminals 16 comprises a laminar body 38 which is substantially L-shaped and complementary to the corresponding seat 19 and has a third connection portion 39, which comprises a pair of first opposite wings 40 with free ends 41 which are folded toward the body 38 so as to form the insertion seat of the corresponding male terminal portion 17, and a fourth portion 42, which is provided with two pairs, respectively, of second wings 43 and third wings 44 for clinching to the stripped end region of the corresponding power supply cable 24.

The body 38 of the female terminal 16 is shaped in opposition to the first wings 40 so as to form a linear stud 45 for guiding the insertion in the corresponding channel 27 formed in the corresponding first portion 20 of the seat 19.

The first wings 40 are shaped so as to form folds with a circular arc-like profile which delimit an insertion section which is such as to force the corresponding male terminal 17 to perform insertion with elastic forcing.

The second wings 43 are longer than the third wings 44.

Each one of the male terminals 17 is constituted by a laminar body 47 which has a fifth portion 48 which is shaped so as to form a laminar tang 49 for insertion upon connection in the section formed by said first wings 40, which is radiused and monolithic with respect to a sixth portion 50 which has an end 51 for connection to the wires of the stator windings, designated by the reference numeral 52.

In particular, the fifth portion 48 has a free end 53 which tapers outwards in order to guide insertion.

The end 51 is provided with fifth opposite wings 54 which are folded on the plane of arrangement of the body 47 of said male terminal 17 with free ends 55 which converge at the axis of said end 51, so as to form a self-centering tapering seat 56 for a corresponding wire of the stator 11.

In particular, the fifth wings 54 are shaped at facing edge portions 57 so as to form blades 58 which are adapted to punch through the insulating sheath of the accommodated wire.

The end 51 has, in this case also, two pairs of third tabs 59 for retention in elevation with the free end with respect to the arrangement of the end 51.

Furthermore, the end 51 is laterally provided with two retention teeth 60.

In another embodiment of the male terminal 17, generally designated by the reference numeral 61, the laminar body 47 is shaped so as to form substantially two parallel ends 51 which are arranged symmetrically opposite with respect to the axis of the fifth portion 48.

In this embodiment, the second section 15 also comprises an auxiliary element for connection to the stator 11, which is associated with the body 18; the auxiliary element is shaped like a half box and so as to form parallel seats which are adapted for the guided connection of the end portions of the stator windings to corresponding ends 51 of the male terminals 17 inserted therein.

Finally, it is noted that the assembly 10 can be advantageously preassembled separately from the stator 11.

In practice it has been observed that the present invention has achieved the intended aim and objects.

Attention is drawn to the extreme flexibility in application of the connection assembly according to the invention, which allows, both during production of the electric motor and during connection thereof to the power supply, connections which are safe in terms of short-circuits or damage to the components and for the operator.

It should also be noted that the connection assembly according to the invention allows high automation both in the manufacture of the electric motor and in the manufacture of said assembly, also allowing last-minute modifications in the arrangement and setting of the connections.

It should also be noted that the connection assembly according to the invention, by virtue of its structure, allows mass-production with costs and times which are competitive with respect to connectors having similar functionalities.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connection assembly (10) for the windings of a stator (11) of an electric motor (12), comprising a connector (13) which is constituted by a first section (14) for connection to the terminals, said first section (14) accommodating at least one of female terminals (16) which are adapted for connection to at least one of complementary male terminals (17) which are connected to the stator windings and to a thermal protection device, said first section (14) being constituted by a box-like body (18) which is shaped so as to form at least one of seats (19) which are electrically insulated from each other, each seat (19) being designed to accommodate a corresponding female terminal (16) which is shaped substantially complementarily, **characterised in that** the walls that form each one of said seats (19) are forming, for said seats (19), a substantially L-shaped extension with a connecting first portion (20) which on assembly is aligned with the longitudinal extension of said male terminals (17) and is provided with an opening (21) for the insertion of at least part of a corresponding one of said terminals (17), and a second portion (22) which has an extension which is substantially perpendicular to said first portion (20) for supporting a corresponding female terminal (16) and is provided with a second end opening (23) for the insertion of the corresponding end portion of the corresponding power supply cable (24), and **in that** the connector (13) is further constituted by a second section (15) for anchoring to the stator (11) of the electric motor (12).

2. The connection assembly (10) according to claim 1, **characterized in that** said body (18) has, for each one of said first portions (20), at the internal definition surface that lies opposite said second portion (22), a first laminar retention tab (25) which is flexible and inclined with respect to the plane of arrangement of the elevation wall, which has a free end (26) which is raised with respect to the latter, so as to form a locking abutment for part of the corresponding female terminal (16) in the opposite direction with respect to the insertion direction.

3. The connection assembly (10) according to claim 1, **characterized in that** said body (18), for each one of said first portions (20), at the definition surface that lies opposite the one related to said first tab (25), is shaped so as to form a straight channel (27) for guiding the insertion of the corresponding female terminal (16).

4. The connection assembly (10) according to one or more of the preceding claims, **characterized in that** said first opening (21) is shaped substantially complementarily to the insertion, portion of the corresponding male terminal (17) and is arranged so as to guide the latter in insertion in the corresponding female terminal (16) portion.

5. The connection assembly (10) according to one or more of the preceding claims, **characterized in that** said body (18) is shaped, in the vicinity of each one of said second openings (23), so as to form a recess (28) which is associated with retention means for accommodating in a predefined position the end portion of a corresponding power supply cable (24).

6. The connection assembly (10) according to claim 5, **characterized in that** said retention means are constituted by opposite teeth (29).

7. The connection assembly (10) according to claim 6, **characterized in that** each one of the recesses (28) is surrounded by a guiding border (30) which is substantially parallel to the corresponding opposite first portion (20).

8. The connection assembly (10) according to one or more of the preceding claims, **characterized in that** said second section (15) is constituted by a second hollow tab (31) whose length is substantially parallel to the first portions (20) and which is monolithically coupled to the free end of a bracket (32) which is in turn monolithic with respect to said body (18) in a position which is opposite to the insertion position of said power supply cables (24), said second tab (31) being adapted to form the seat for said thermal protection device.

9. The connection assembly (10) according to claim 8, **characterized in that** said second tab (31) is adapted to allow the accommodation of said thermal protection device even after connection has occurred.

10. The connection assembly (10) according to one or more of the preceding claims, **characterized in that** said connector (13) is provided with a cover (33).

11. The connection assembly (10) according to claim 10, **characterized in that** said cover (33) has a closure and opening path of the edge-hinged type which lies transversely to the insertion path of said power supply cables (24).

12. The connection assembly (10) according to claim 11, **characterized in that** said cover (33) is fixed and pivoted laterally to said body (18) by way of bands (34) which are monolithic with respect to the latter and are provided with a weaker region for folding.

13. The connection assembly (10) according to claim 12, **characterized in that** it comprises means for locking said cover (33) in the closed condition.

14. The connection assembly (10) according to claim 13, **characterized in that** said means for locking in the closed condition are constituted by monolithic teeth (35) which protrude from said body (18) and are arranged opposite said pivoting bands (34) and are adapted to enter corresponding holes (36) formed at the free end of said cover (33).

15. The connection assembly (10) according to claim 3, **characterized in that** said female terminal (16) comprises a laminar body (38) which is substantially L-shaped and complementary with respect to the corresponding seat (19) and is provided with a third connecting portion (39) which comprises a pair of first opposite wings (40) with free ends (41) which are folded toward the body (38) so as to form the insertion seat of the corresponding male terminal (17) portion and a fourth portion (42) provided with two pairs of second and third wings (43,44), respectively for clinching to the stripped end region of the corresponding power supply cable (24).

16. The connection assembly (10) according to claim 15, **characterized in that** said body (38) of said female terminal (16) is shaped, in opposition to said first wings (40), so as to form a linear guiding stud (45) for insertion in the corresponding channel (27) formed in the corresponding first portion (20) of said seat (19).

17. The connection assembly (10) according to claim 16, **characterized in that** said male terminal (17) is constituted by a laminar body (47) which has a fifth portion (48) which is shaped so as to form a laminar tang (49) for insertion, upon connection, in the section formed by said first wings (40), which is radiused with a sixth portion (50) which has at least one end (51) for connection to the wires of the stator (11).

18. The connection assembly (10) according to claim 17, **characterized in that** said sixth portion (50) comprises two parallel ends which are arranged symmetrically on opposite sides with respect to the axis of said fifth portion (48).

19. The connection assembly (10) according to claim 18, **characterized in that** said second section (15) comprises an auxiliary element for connection to the stator (11) which is associated with said body (18), said element being shaped like a half-box and so as to form parallel seats which are adapted for the guided connection of the end portions (51) of the stator windings to corresponding said ends of said male terminals (17) inserted therein.

20. The connection assembly (10) according to one or more of the preceding claims, **characterized in that** it can be fully preassembled separately from the stator (11).

## Patentansprüche

1. Eine Verbindungsanordnung (10) für die Wicklungen eines Stators (11) eines Elektromotors (12), die ein Anschlussstück (13) umfasst, welches aus einem ersten Abschnitt (14) zur Verbindung mit den Klemmen besteht, wobei der erste Abschnitt (14) mindestens eine der weiblichen Klemmen (16) aufnimmt, die zur Verbindung mit mindestens einer von kömplementären männlichen Klemmen (17) ausgebildet sind, welche mit den Statorwicklungen und mit einer Wärmeschutzvorrichtung verbunden sind, wobei der erste Abschnitt (14) aus einem kastenähnlichen Körper (18) besteht, der so geformt ist, dass er mindestens einen der Sitze (19) bildet, welche elektrisch voneinander isoliert sind, wobei jeder Sitz (19) konstruiert ist, um eine entsprechende weibliche Klemme (16) aufzunehmen, die im Wesentlichen komplementär geformt ist, **dadurch gekennzeichnet, dass** die Wände, die jeden der Sitze (19) bilden, für die Sitze (19) eine im Wesentlichen L-förmige Verlängerung bilden, mit einem ersten Verbindungs-Abschnitt (20), der beim zusammenbau mit der Längserweiterung der männlichen Klemmen (17) ausgerichtet ist und der mit einer Öffnung (21) zum Einsetzen mindestens eines Teils einer entsprechenden der Klemmen (17) ausgestattet ist, und mit einem zweiten Abschnitt (22), der eine Verlängerung hat, die im Wesentlichen rechtwinklig zu dem ersten Abschnitt (20) ist, zum Tragen einer entsprechenden weiblichen Klemme (16), und mit einer zweiten Endöffnung (23) zum Einführen des entsprechenden Endabschnitts des entsprechenden Stromversorgungskabels (24) ausgestattet ist, und **dadurch**, dass das Anschlussstück (13) weiter aus einem zweiten Abschnitt (15) zur Verankerung am Stator (11) des Elektromotors (12) besteht.

2. Eine Verbindungsanordnung (10) gemäß Anspruch 1, **dadurch gekennzeichnet, dass** der Körper (18) für jeden der ersten Abschnitte (20), an der inneren Bestimmungsoberfläche, die gegenüber dem zweiten Abschnitt (22) liegt, einen ersten laminaren Rückhaltevorsprung (25) hat, der biegsam und im Verhältnis zur Anordnungsebene der Elevationswand geneigt ist und ein freies Ende (26) hat, das im Verhältnis zu Letzterer erhöht ist, um ein Verriegelungs-Widerlager für einen Teil der entsprechenden weiblichen Klemme (16) in der Richtung zu bilden, die der Einführrichtung entgegengesetzt ist.

3. Eine verbindungsanordnung (10) gemäß Anspruch 1, **dadurch gekennzeichnet, dass** der Körper (18) für jeden der ersten Abschnitte (20) an der Bestimmungsoberfläche, die gegenüber derjenigen liegt, an der sich der erste Vorsprung (25) befindet, so geformt ist, dass er einen geraden Kanal (27) zur Führung des Einsetzens der entsprechenden weiblichen Klemme (16) bildet.

4. Eine Verbindungsanordnung (10) gemäß einem oder mehreren der obigen Ansprüche, **dadurch gekennzeichnet, dass** die erste Öffnung (21) im Wesentlichen komplementär zum Einführungsabschnitt der entsprechenden männlichen Klemme (17) geformt ist und so angeordnet ist, dass sie die Letztere beim Einsetzen in den entsprechenden Abschnitt der weiblichen Klemme (16) führt.

5. Eine Verbindungsanordnung (10) gemäß einem oder mehreren der obigen Anspruche, **dadurch gekennzeichnet, dass** der Körper (18) in der Nähe jeder der zweiten Öffnungen (23) so geformt ist, dass er eine Aussparung (28) bildet, welche mit Rückhaltemitteln verbunden ist, um den Endabschnitt eines entsprechenden Stromversorgungskabels (24) in einer vordefinierten Position aufzunehmen.

6. Eine verbindungsanordnung (10) gemäß Anspruch 5, **dadurch gekennzeichnet, dass** die Rückhaltemittel aus gegenüberliegenden Zähnen (29) bestehen.

7. Eine Verbindungsanordnung (10) gemäß Anspruch 6, **dadurch gekennzeichnet, dass** jede der Aussparungen (28) von einem Führungsrand (30) umgeben ist, welcher im Wesentlichen parallel zum entsprechenden gegenüberliegenden ersten Abschnitt (20) ist.

8. Eine Verbindungsanordnung (10) gemäß einem oder mehreren der obigen Ansprüche, **dadurch gekennzeichnet, dass** der zweite Abschnitt (15) aus einem zweiten hohlen Vorsprung (31) besteht, dessen Länge im Wesentlichen parallel zu den ersten Abschnitten (20) ist und der monolithisch mit dem freien Ende eines Arms (32) gekoppelt ist, welcher wiederum monolithisch mit dem Körper (18) in einer Position ist, welche gegenüber der Einführungsposition der Stromversorgungskabel (24) liegt, wobei der zweite Vorsprung (31) ausgebildet ist, um den Sitz für die Wärmeschutzvorrichtung zu bilden.

9. Eine Verbindungsanordnung (10) gemäß Anspruch 8, **dadurch gekennzeichnet, dass** der zweite Vorsprung (31) ausgebildet ist, um die Aufnahme der Wärmeschutzvorrichtung zu ermöglichen, selbst nachdem die Verbindung stattgefunden hat.

10. Eine Verbindungsanordnung (10) gemäß einem oder mehreren der obigen Ansprüche, **dadurch gekennzeichnet, dass** das Anschlussstuck (13) mit einer Abdeckung (33) ausgestattet ist.

11. Eine Verbindungsanordnung (10) gemäß Anspruch 10, **dadurch gekennzeichnet, dass** die Abdeckung (33) einen Öffnungsund Verschlusspfad des an den Kanten drehbar gelagerten Typs hat, welcher quer zum Einführungspfad der Stromversorgungskabel (24) liegt.

12. Eine Verbindungsanordnung (10) gemäß Anspruch 11 **dadurch gekennzeichnet, dass** die Abdeckung (33) durch Bänder (34) am Körper (18) befestigt ist und seitlich drehbar an ihm angebracht ist, welche monolithisch zu Letzterem und mit einem schwächeren Abschnitt zum Falten ausgestattet sind.

13. Eine Verbindungsanordnung (10) gemäß Anspruch 12, **dadurch gekennzeichnet, dass** sie Mittel zum Verriegeln der Abdeckung (33) im geschlossenen Zustand umfasst.

14. Eine Verbindungsanordnung (10) gemäß Anspruch 13, **dadurch gekennzeichnet, dass** die Mittel zum Verriegeln im geschlossenen Zustand aus monolithischen Zähnen (35) bestehen, die aus dem Körper (18) herausragen und gegenüber den drehbar angebrachten Bändern (34) angeordnet und ausgebildet sind, um in entsprechende Löcher (36) einzugreifen, die am freien Ende der Abdeckung (33) geformt sind.

15. Eine Verbindungsanordnung (10) gemäß Anspruch 3, **dadurch gekennzeichnet, dass** die weibliche Klemme (16) einen laminaren Körper (38) umfasst, der im Wesentlichen L-förmig und komplementär zu dem entsprechenden Sitz (19) ist, und mit einem dritten Verbindungsabschnitt (39) ausgestattet ist, welcher ein Paar erster gegenüberliegender Flügel (40) mit freien Enden (41) umfasst, die zum Körper (38) hin geknickt sind, um den Einführsitz des Abschnitts der entsprechenden männlichen Klemme (17) zu bilden, und mit einem vierten Abschnitt (42), ausgestattet mit zwei Paaren zweiter beziehungsweise dritter Flügel (43, 44), zum Festklemmen an dem abisolierten Endabschnitt des entsprechenden Stromversorgungskabels (24).

16. Eine Verbindungsanordnung (10) gemäß Anspruch 15, **dadurch gekennzeichnet, dass** der Körper (38) der weiblichen Klemme (16) gegenüber den ersten Flügeln (40) so geformt ist, dass er einen linearen Führungsbolzen (45) zum Einsetzen in den entsprechenden Kanal (27) bildet, welcher im entsprechenden ersten Abschnitt (20) des Sitzes (19) geformt ist.

17. Eine Verbindungsanordnung (10) gemäß Anspruch 16, **dadurch gekennzeichnet, dass** die männliche Klemme (17) aus einem laminaren Körper (47) besteht, der einen fünften Abschnitt (48) hat, welcher so geformt ist, dass er einen laminaren Lappen (49) zum Einführen, beim Verbinden, in den Abschnitt bildet, welcher von den ersten Flügeln (40) gebildet wird, und der von einem sechsten Abschnitt (50) abgerundet ist, welcher mindestens ein Ende (51) für die Verbindung mit den Drähten des Stators (11) hat.

18. Eine Verbindungsanordnung (10) gemäß Anspruch 17, **dadurch gekennzeichnet, dass** der sechste Abschnitt (50) zwei parallele Enden umfasst, die symmetrisch auf gegenüberliegenden Seiten in Bezug auf die Achse des funften Abschnitts (48) angeordnet sind.

19. Eine Verbindungsanordnung (10) gemäß Anspruch 18, **dadurch gekennzeichnet, dass** der zweite Abschnitt (15) ein zusätzliches Element zur Verbindung mit dem Stator (11) umfasst, das mit dem Körper (18) verknüpft ist, wobei das Element wie ein halber Kasten geformt ist und so ausgebildet ist, dass es parallele Sitze bildet, die ausgebildet sind für die geführte Verbindung der Endabschnitte (51) der Statorwicklungen mit den entsprechenden Enden der darin eingesetzten männlichen Klemmen (17).

20. Eine Verbindungsanordnung (10) gemäß einem oder mehreren der obigen Ansprüche, **dadurch gekennzeichnet, dass** sie, separat vom Stator (11), vollständig vormontiert werden kann.

## Revendications

1. Ensemble de connexion (10) pour les enroulements d'un stator (11) d'un moteur électrique (12), comprenant un connecteur (13) qui est formé d'un premier tronçon (14) de connexion aux bornes, ledit premier tronçon (14) recevant au moins l'une de bornes femelles (16) qui sont adaptées pour une connexion à au moins l'une de bornes mâles complémentaires (17) qui sont connectées aux enroulements de stator et à un dispositif de protection thermique, ledit premier tronçon (14) étant formé d'un corps (18) analogue à un boîtier qui est conformé de manière à former au moins l'un des sièges (19) qui sont électriquement isolés les uns par rapport aux autres, chaque siège (19) étant conçu pour recevoir une borne femelle correspondante (16) qui est conformée de manière sensiblement complémentaire, **caractérisé en ce que** les parois qui forment chacun desdits sièges (19) forment, pour lesdits sièges (19), une extension sensiblement en forme de L avec une première partie de connexion (20) qui, lors d'un assemblage, est alignée avec l'extension longitudinale desdites bornes mâles (17) et est munie d'une ouverture (21) pour l'insertion d'au moins une partie d'une correspondante desdites bornes (17), et une deuxième partie (22) qui a une extension qui est sensiblement perpendiculaire à ladite première partie (20) pour supporter une borne femelle correspondante (16) et est munie d'une seconde ouverture d'extrémité (23) pour l'insertion de la partie d'extrémité correspondante du câble d'alimentation correspondant (24), et **en ce que** le connecteur (13) est également formé d'un second tronçon (15) pour un ancrage au stator (11) du moteur électrique (12).

2. Ensemble de connexion (10) selon la revendication 1, **caractérisé en ce que** ledit corps (18) a, pour chacune desdites premières partie (20), sur la surface de définition interne qui est opposée à ladite deuxième partie (22), une première languette de retenue lamellaire (25) qui est souple et inclinée par rapport au plan d'agencement de la paroi d'élévation, qui a une extrémité libre (26) qui est surélevée par rapport à cette dernière, de manière à former une butée de blocage pour une partie de la borne femelle correspondante (16) dans la direction opposée par rapport à la direction d'insertion.

3. Ensemble de connexion (10) selon la revendication 1, **caractérisé en ce que** ledit corps (18), pour chacune desdites premières parties (20), sur la surface de définition qui est opposée à celle associée à ladite première languette (25), est conformé de manière à former un canal rectiligne (27) pour guider l'insertion de la borne femelle correspondante (16).

4. Ensemble de connexion (10) selon une ou plusieurs des revendications précédentes, **caractérisé en ce que** ladite première ouverture (21) est conformée de manière sensiblement complémentaire à la partie d'insertion de la borne mâle correspondante (17) et est agencée de manière à guider cette dernière lors d'une insertion dans la partie de borne femelle correspondante (16).

5. Ensemble de connexion (10) selon une ou plusieurs des revendications précédentes, **caractérisé en ce que** ledit corps (18) est conformé, au voisinage de chacune desdites secondes ouvertures (23), de manière à former un évidement (28) qui est associé à des moyens de retenue destinés à recevoir dans une position prédéfinie la partie d'extrémité d'un câble d'alimentation correspondant (24).

6. Ensemble de connexion (10) selon la revendication 5, **caractérisé en ce que** lesdits moyens de retenue sont formés de dents opposées (29).

7. Ensemble de connexion (10) selon la revendication 6, **caractérisé en ce que** chacun des évidements (28) est entouré d'un bord de guidage (30) qui est sensiblement parallèle à la première partie opposée correspondante (20).

8. Ensemble de connexion (10) selon une ou plusieurs des revendications précédentes, **caractérisé en ce que** ledit second tronçon (15) est formé d'une seconde languette creuse (31) dont la longueur est sensiblement parallèle aux premières parties (20) et qui est couplée d'un seul tenant à l'extrémité libre d'un support (32) qui est à son tour d'un seul tenant par rapport audit corps (18) dans une position qui est opposée à la position d'insertion desdits câbles d'alimentation (24), ladite seconde languette (31) étant adaptée pour former le siège pour ledit dispositif de protection thermique.

9. Ensemble de connexion (10) selon la revendication 8, **caractérisé en ce que** ladite seconde languette (31) est adaptée pour permettre la réception dudit dispositif de protection thermique même après qu'une connexion a eu lieu.

10. Ensemble de connexion (10) selon une ou plusieurs des revendications précédentes, **caractérisé en ce que** ledit connecteur (13) est muni d'un couvercle (33).

11. Ensemble de connexion (10) selon la revendication 10, **caractérisé en ce que** ledit couvercle (33) a un trajet de fermeture et d'ouverture du type à bord articulé qui s'étend transversalement au trajet d'insertion desdits câbles d'alimentation (24).

12. Ensemble de connexion (10) selon la revendication 11, **caractérisé en ce que** ledit couvercle (33) est fixé et pivote latéralement sur ledit corps (18) au moyen de bandes (34) qui sont d'un seul tenant par rapport à ce dernier et comportent une zone plus faible pour le pliage.

13. Ensemble de connexion (10) selon la revendication 12, **caractérisé en ce qu'**il comprend des moyens de blocage dudit couvercle (33) dans l'état fermé.

14. Ensemble de connexion (10) selon la revendication 13, **caractérisé en ce que** lesdits moyens de blocage à l'état fermé sont formés de dents monoblocs (35) qui font saillie à partir dudit corps (18) et sont agencées à l'opposé desdites bandes pivotantes (34) et sont adaptées pour pénétrer dans des trous correspondants (36) formés à l'extrémité libre dudit couvercle (33).

15. Ensemble de connexion (10) selon la revendication 3, **caractérisé en ce que** ladite borne femelle (16) comprend un corps lamellaire (38) qui est sensiblement en forme de L et complémentaire par rapport à l'embase correspondante (19) et est muni d'une troisième partie de connexion (39) qui comprend une paire de premières ailes opposées (40) ayant des extrémités libres (41) qui sont pliées vers le corps (38) de manière à former le siège d'insertion de la partie de borne mâle correspondante (17), et d'une quatrième partie (42) munie de deux paires de deuxièmes et troisièmes ailes (43, 44), respectivement, pour un sertissage sur la zone d'extrémité dénudée du câble d'alimentation correspondant (24).

16. Ensemble de connexion (10) selon la revendication 15, **caractérisé en ce que** ledit corps (38) de ladite borne femelle (16) est conformé, en opposition auxdites premières ailes (40), de manière à former un téton de guidage linéaire (45) pour une insertion dans le canal correspondant (27) formé dans la première partie correspondante (20) dudit siège (19).

17. Ensemble de connexion (10) selon la revendication 16, **caractérisé en ce que** ladite borne mâle (17) est formée d'un corps lamellaire (47) qui a une cinquième partie (48) qui est conformée de manière à former un tenon lamellaire (49) pour une insertion, lors d'une connexion, dans le tronçon formé par lesdites premières ailes (40), qui est arrondi en ayant une sixième partie (50) qui a au moins une extrémité (51) de connexion aux fils du stator (11).

18. Ensemble de connexion (10) selon la revendication 17, **caractérisé en ce que** ladite sixième partie (50) comprend deux extrémités parallèles qui sont agencées symétriquement sur des côtés opposés par rapport à l'axe de ladite cinquième partie (48).

19. Ensemble de connexion (10) selon la revendication 18, **caractérisé en ce que** ledit second tronçon (15) comprend un élément auxiliaire de connexion au stator (11) qui est associé audit corps (18), ledit élément étant conformé comme un demi-boîtier et de manière à former des embases parallèles qui sont adaptées pour la connexion guidée des parties d'extrémité (51) des enroulements de stator auxdites extrémités correspondantes desdites bornes mâles (17) insérées dans celles-ci.

20. Ensemble de connexion (10) selon une ou plusieurs des revendications précédentes, **caractérisé en ce qu'**il peut être entièrement préassemblé séparément du stator (11).
